# EUROPÄISCHE PATENTSCHRIFT

(11) **EP 2 731 832 B1**
(45) Veröffentlichungstag und Bekanntmachung des Hinweises auf die Patenterteilung: **27.02.2019**
(21) Anmeldenummer: 12731499.5
(22) Anmeldetag: 06.07.2012
(51) Int. Cl.: B60S 1/38, B60S 1/40

(54) **WISCHBLATTADAPTEREINHEIT**
WIPER BLADE ADAPTER UNIT
ENSEMBLE ADAPTATEUR DE BALAI D'ESSUIE-GLACE

(30) Priorität: 15.07.2011 DE 102011079227
(43) Veröffentlichungstag der Anmeldung: 21.05.2014
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2012/063271
(87) Internationale Veröffentlichungsnummer: WO 2013/010823

(56) Entgegenhaltungen:
- EP-A2- 1 911 641
- FR-A1- 2 744 082
- US-A1- 2011 005 020

## Beschreibung

### Stand der Technik

Es ist bereits eine Wischblattadaptereinheit zum Verbinden eines Wischblatts mit einem Wischarmadapter, mit einem insbesondere ein Ende des Wischarmadapters aufnehmenden Grundkörper, der auf seiner Unterseite ein Plateau aufweist, wobei an dem Grundkörper zumindest ein Bereich vorgesehen ist, der zum Zwecke eines Form- und/oder Toleranzausgleichs nachgiebig ausgeformt ist, wobei der zum Zwecke eines Form- und/oder Toleranzausgleichs nachgiebige Bereich innerhalb des Plateaus angeordnet ist, vorgeschlagen worden.

Dokument EP 1 911 641 A1 offenbart eine Wischblattadaptereinheit gemäß dem Oberbegriff des Anspruchs 1.

### Offenbarung der Erfindung

Die Erfindung geht aus von einer Wischblattadaptereinheit zum Verbinden eines Wischblatts mit einem Wischarmadapter, mit einem insbesondere ein Ende des Wischarmadapters aufnehmenden Grundkörper, der auf seiner Unterseite ein Plateau aufweist, wobei an dem Grundkörper zumindest ein Bereich vorgesehen ist, der zum Zwecke eines Form- und/oder Toleranzausgleichs nachgiebig ausgeformt ist, wobei der zum Zwecke eines Form- und/oder Toleranzausgleichs nachgiebige Bereich innerhalb des Plateaus angeordnet ist.
Es wird vorgeschlagen, dass der innerhalb des Plateaus angeordnete nachgiebige Bereich als eine federnde Lasche ausgebildet ist. Dadurch kann eine konstruktiv besonders vorteilhafte Ausgestaltung des Grundkörpers erreicht werden, wobei in einem montierten Zustand insbesondere eine besonders vorteilhafte Führung bzw. Lagerung des Wischarmadapters erreicht werden kann. Ferner kann dadurch der nachgiebige Bereich konstruktiv besonders einfach ausgestaltet werden. Unter einem "Wischarmadapter" soll in diesem Zusammenhang insbesondere ein Adapter verstanden werden, der einen Kontaktbereich zu einem Wischarmbauteil aufweist und dazu vorgesehen ist, einen Kopplungsbereich des Wischarmbauteils für eine Kopplung und/oder Kontaktierung mit einem Wischblattadapter bereitzustellen. Bevorzugt ist das Wischarmbauteil an einem Wischarm befestigbar. Unter einem "Wischblattadapter" soll in diesem Zusammenhang insbesondere ein Adapter verstanden werden, der einen Kontaktbereich zu einem Wischblattbauteil aufweist und mit dem Wischblattbauteil, in einem demontierten Zustand eines Wischblatts von einem Wischarm, zumindest in einem Betriebszustand unverlierbar verbunden und dazu vorgesehen ist, einen Kopplungsbereich des Wischblattbauteils für eine Kopplung und/oder Kontaktierung mit einem Wischarmadapter bereitzustellen. Unter "vorgesehen" soll insbesondere speziell ausgelegt und/oder ausgestattet verstanden werden. Unter "nachgiebig ausgeformten Bereichen" sollen insbesondere Bereiche verstanden werden, die bei einem Aufbringen einer Kraft während eines fachgerechten Montagevorgangs um zumindest 0,5 mm aus ihrem Neutralzustand ausgelenkt werden und bei einem Aufheben der Kraft, beispielsweise bei einer Demontage, wieder in ihren Neutralzustand zurückfedern. Dabei sind die nachgiebig ausgeformten Bereiche vorzugsweise einstückig mit dem Grundkörper ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Unter einem "Plateau" soll insbesondere eine Anlagefläche verstanden werden, die in einer Richtung höher liegt als die restlichen Anlageflächen des Grundkörpers. Unter einer "Unterseite des Grundkörpers" soll insbesondere eine in einem montierten Zustand einem Wischblatt zugewandte Seite des Grundkörpers verstanden werden. Unter "innerhalb des Plateaus angeordnet" soll insbesondere verstanden werden, dass der nachgiebige Bereich einen Teil der Anlagefläche des Plateaus ausbildet bzw. in die Anlagefläche des Plateaus eingebracht ist und/oder in einer Draufsicht auf das Plateau innerhalb einer das Plateau begrenzenden Plateaukonturlinie angeordnet ist. Unter einer "federnden Lasche" soll insbesondere ein Element verstanden werden, das aus seiner Neutralposition durch Aufbringen einer Kraft während eines fachgerechten Montagevorgangs um zumindest 0,5 mm elastisch ausgelenkt werden kann und das nach Aufheben der Kraft in seine Neutralposition zurückfedert.

Des Weiteren wird vorgeschlagen, dass der als federnde Lasche ausgebildete Bereich zumindest eine Anlagefläche aufweist, die einen Anschlag für einen Wischarmadapter bildet. Dadurch können besonders vorteilhaft Anschläge für verschieden breite Wischarmadapter bereitgestellt werden. Unter einem "Anschlag für einen Wischarmadapter" soll insbesondere eine Anlagefläche verstanden werden, an der der Wischarmadapter zur Führung und Positionierung in dem Grundkörper der Wischblattadaptereinheit anliegt.

Ferner wird vorgeschlagen, dass an der Unterseite des Grundkörpers zusätzlich zu dem innerhalb des Plateaus angeordneten Bereich zumindest ein zweiter nachgiebiger Bereich angeordnet ist. Dadurch kann der Wischarmadapter besonders vorteilhaft und präzise fixiert und geführt werden.

Zudem wird vorgeschlagen, dass der zweite an der Unterseite des Grundkörpers angeordnete nachgiebig ausgeformte Bereich als eine federnde Lasche ausgebildet ist, die in eine von einer Oberseite des Grundkörpers abgewandte Richtung über das Plateau hinausragt. Dadurch kann der als federnde Lasche ausgebildete Bereich einen besonders vorteilhaften seitlichen Anschlag für einen Wischarmadapter ausbilden. Unter einer "Oberseite des Grundkörpers" soll insbesondere eine der Unterseite des Grundkörpers abgewandte Seite des Grundkörpers verstanden werden, die insbesondere in dem montierten Zustand dem Wischarm abgewandt und dem Wischarmadapter zugewandt ist.

Des Weiteren wird vorgeschlagen, dass der Grundkörper an einer Oberseite eine obere Anlagefläche aufweist, in die eine zumindest im Wesentlichen in einer Wischrichtung verlaufende Tasche eingebracht ist. Dadurch kann der Grundkörper insbesondere vorteilhaft und mit einem geringen Gewicht ausgestaltet werden. Unter einer "Anlagefläche" soll in diesem Zusammenhang insbesondere eine Fläche verstanden werden, auf der in dem montierten Zustand der Wischarmadapter aufliegt.

Weiterhin wird vorgeschlagen, dass der Grundkörper zwei Seitenwände aufweist, die in einem Bereich des Plateaus jeweils zumindest vier Schlitze aufweisen. Dadurch kann der Grundkörper besonders vorteilhaft materialsparend ausgebildet werden, wobei eine benötigte Stabilität gewahrt bleibt. Unter einer "Seitenwand" soll in diesem Zusammenhang insbesondere eine Wandung verstanden werden, die den Grundkörper in Wischrichtung begrenzt.

Weiter wird vorgeschlagen, dass der Grundkörper zumindest eine Seitenwand aufweist, die in einem Bereich des Plateaus zumindest einen offenen Schlitz aufweist, der in seiner Haupterstreckung von seiner geschlossenen Seite bis zu seiner offenen Seite zumindest im Wesentlichen von einer einzelnen, zumindest im Wesentlichen geradlinigen Konturlinie begrenzt ist. Dadurch kann der Grundköper besonders vorteilhaft gefertigt bzw. insbesondere vorteilhaft ausgeformt werden. Unter einem "offenen Schlitz" soll in diesem Zusammenhang insbesondere ein Schlitz verstanden werden, der eine offene Kontur aufweist und insbesondere nicht eine in sich geschlossene Konturlinie ausbildet. Unter "zumindest im Wesentlichen" soll in diesem Zusammenhang insbesondere verstanden werden, dass eine Abweichung von einer geradlinigen Kontur insbesondere weniger als 10 Grad, vorzugsweise weniger als 5 Grad und besonders bevorzugt weniger als 1 Grad beträgt. Unter einer "Konturlinie" soll insbesondere eine aus Wischrichtung betrachtete Außenkante eines Schlitzes verstanden werden, die den Schlitz nach außen in eine Richtung begrenzt.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Wischsystem mit einem Wischblatt und einer Wischblattadaptereinheit,

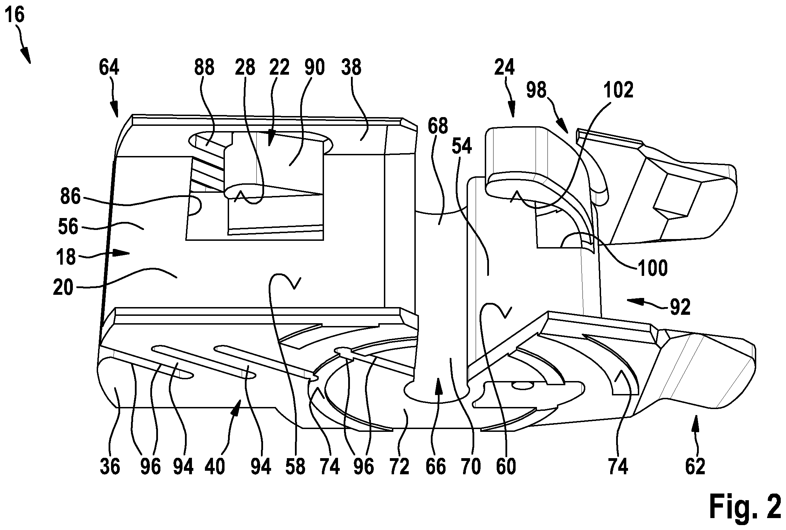

- Fig. 2: einen Grundkörper der erfindungsgemäßen Wischblattadaptereinheit in einer Ansicht von unten,

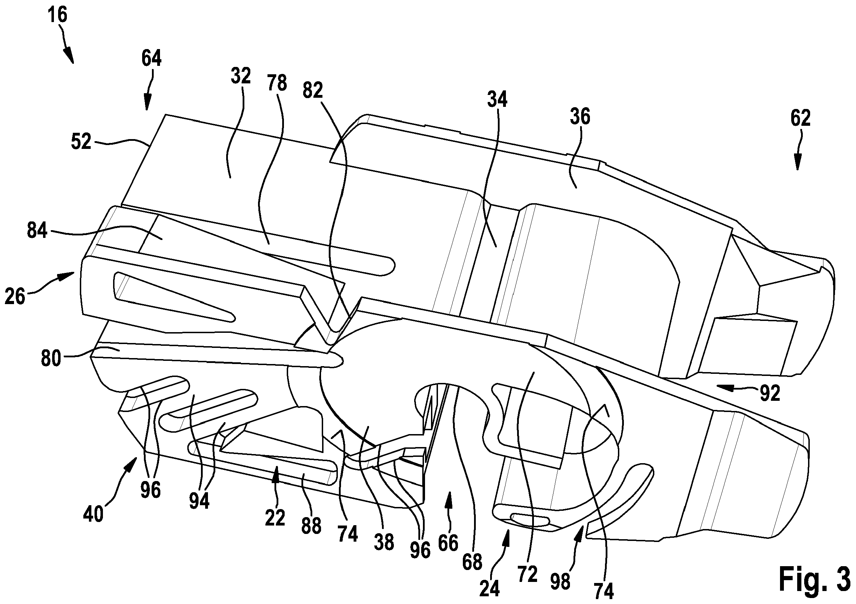

- Fig. 3: einen Grundkörper der erfindungsgemäßen Wischblattadaptereinheit in einer Ansicht von oben und

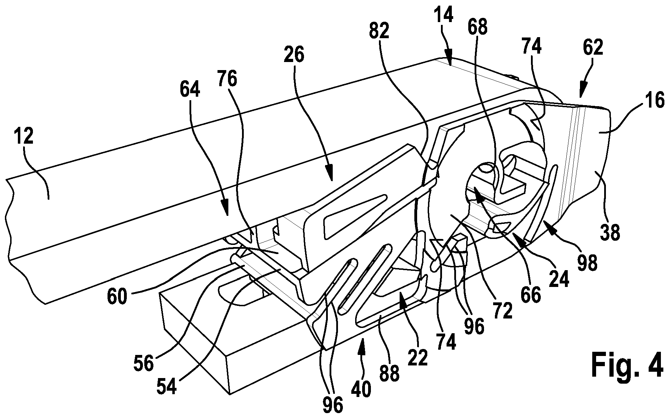

- Fig. 4: den Grundkörper der erfindungsgemäßen Wischblattadaptereinheit mit einem Wischarmadapter in einem montierten Zustand.

### Beschreibung des Ausführungsbeispiels

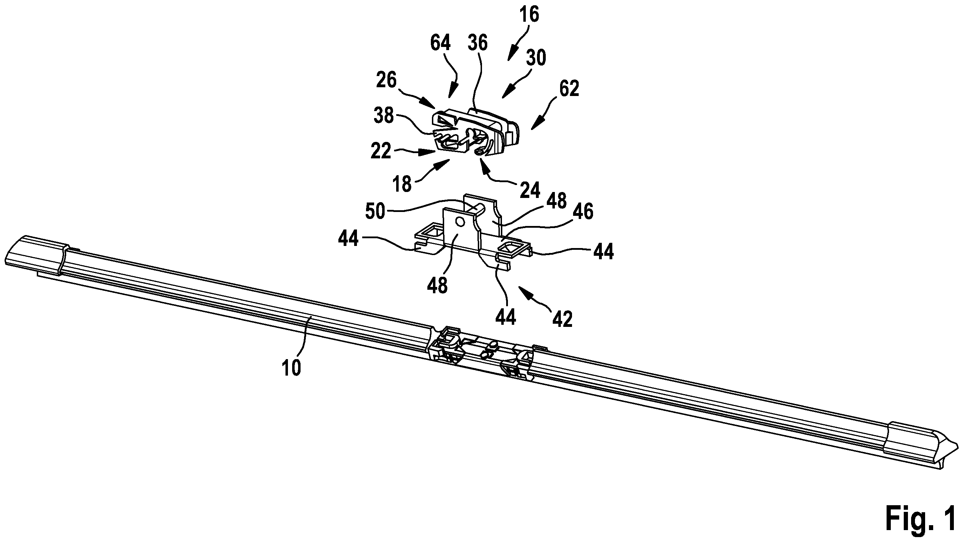

Figur 1 zeigt ein Wischsystem mit einer erfindungsgemäßen Wischblattadaptereinheit. Das Wischsystem umfasst weiter einen Wischarmadapter 12 und ein Wischblatt 10, das dazu vorgesehen ist, eine nicht näher dargestellte Scheibe eines Kraft- und/oder Nutzfahrzeugs zu wischen. Der Wischarmadapter 12 ist hakenförmig ausgebildet, wobei ein Ende 14 des Wischarmadapters 12 eine um 180 Grad umgebogene Biegung aufweist. Je nach Ausführungsart des Wischarmadapters 12 kann die Biegung unterschiedliche Radien und Längen aufweisen. Ebenfalls variabel ist eine Dicke des Wischarmadapters 12. Der Wischarmadapter 12 ist fest mit einem nicht näher dargestellten Wischarm des Kraft- und/oder Nutzfahrzeugs verbunden. Grundsätzlich ist es auch denkbar, dass der Wischarmadapter 12 einstückig mit dem Wischarm ausgeführt ist. An einem der Biegung abgewandten Ende ist der Wischarm bzw. der Wischarmadapter 12 mit einem nicht näher dargestellten Wischermotor verbunden, über den das Wischsystem angetrieben werden kann.

Die Wischblattadaptereinheit ist zum Verbinden des Wischblatts 10 mit dem Wischarmadapter 12 vorgesehen. Dazu weist die Wischblattadaptereinheit ein erstes Element 42 auf, das das Wischblatt 10 aufnimmt und abstützt. Das erste Element 42 umfasst vier Rastelemente 44, mittels deren das Element 42 über einen Formschluss fest mit dem Wischblatt 10 verbunden werden kann. Grundsätzlich ist es dabei auch denkbar, dass das Element 42 weitere oder anders ausgebildete Verbindungselemente aufweist, durch die das erste Element 42 fest über einen Form-, Reib- und/oder Stoffschluss mit dem Wischblatt 10 verbindbar ist. Das Element 42 weist eine Grundplatte 46 auf, an deren Seiten entlang einer Haupterstreckungsrichtung der Grundplatte 46 jeweils eine Seitenwand 48 angebracht ist. Die Seitenwände 48 sind beabstandet von der Grundplatte 46 mit einer zylindrischen Achse 50 verbunden.

Die Wischblattadaptereinheit umfasst weiter einen Grundkörper 16, der über die zylindrische Achse 50 an das erste Element 42 anbindbar ist. Der Grundkörper 16 ist insbesondere zur Aufnahme des Endes 14 des Wischarmadapters 12 vorgesehen. Der Grundkörper 16 besteht im Wesentlichen aus einem Hohlkörper mit zwei Seitenwänden 36, 38, welche eine obere Querwand 52, eine mittlere Querwand 54 und eine untere Querwand 56 einer oberen Anlagefläche 32, einer mittleren Fläche 60 und einer unteren Anlagefläche 58 seitlich begrenzen. Die Seitenwände 36, 38 stehen dabei unten und oben über die Querwände 52, 56 bzw. die Anlageflächen 32, 58 des Grundkörpers 16 hinaus. Der Grundkörper 16 weist drei nachgiebig ausgeformte Bereiche 22, 24, 26 auf, die zum Zwecke eines Form- und/oder Toleranzausgleichs vorgesehen sind. Die nachgiebig ausgeformten Bereiche 22, 24, 26 des Grundkörpers 16 sind als federnde Laschen ausgebildet.

In einer Einbaulage am Wischarmadapter 12 weist der Grundkörper 16 ein dem Wischermotor abgewandtes vorderes Ende 62 auf, in dessen Richtung sich die Seitenwände 36, 38 verjüngen. Des Weiteren weist der Grundkörper 16 ein dem Wischermotor zugewandtes hinteres Ende 64, eine dem Wischblatt 10 zugewandte Unterseite 18 und eine dem Wischblatt 10 abgewandte und dem Wischarmadapter 12 zugewandte Oberseite 30 auf.

An seiner Unterseite 18 weist der Grundkörper 16 eine durchgehende Quernut 66 auf, die sich von der Seitenwand 36 bis zu der anderen Seitenwand 38 erstreckt. Die Quernut 66 bildet in den Seitenwänden 36, 38 jeweils eine dreieckige Aussparung aus, die jeweils in eine kreisförmige Aussparung 68 übergeht. Die Quernut 66 erstreckt sich bis zu der oberen Querwand 52. Ein Nutgrund, der an der oberen Querwand 52 angeordnet ist, bildet einen Hohlzylinder 70 aus, der zum Übergreifen der zylindrischen Achse 50 des ersten Elements 42 vorgesehen ist. Über einen Formschluss zwischen dem Hohlzylinder 70, den der Nutgrund der Quernut 66 ausbildet, und der zylindrischen Achse 50 des ersten Elements 42 wird der Grundkörper 16 fest mit dem ersten Element 42 und somit mit dem Wischblatt 10 verbunden. Der Grundkörper 16 weist an seiner Oberseite 30 eine in die obere Anlagefläche 32 eingebrachte Tasche 34 auf, die in einer Wischrichtung verläuft. Dabei befindet sich die Tasche 34 direkt oberhalb der Quernut 66 auf der dem Nutgrund abgewandten Seite der oberen Querwand 52. An Außenseiten 72 der Seitenwände 36, 38 befinden sich jeweils erhabene ringförmige Anlageflächen 74, die jeweils konzentrisch zu einer Mitte der entsprechenden kreisförmigen Aussparungen 68 angeordnet sind.

Zwischen den Seitenwänden 36, 38 sind die obere Querwand 52 und die mittlere Querwand 54 durch eine Stützwand 76 verbunden, die parallel zu den Seitenwänden 36, 38 verläuft. Entlang der Stützwand 76 weist die obere Querwand 52 eine längliche Aussparung 78 auf. Die obere und mittlere Querwand 52, 54 bilden mit der linken Seitenwand 36 ein Hohlprofil mit einem rechteckigen Querschnitt. Die rechte Seitenwand 38 weist in einem Bereich der länglichen Aussparung 78 eine sich zum hinteren Ende 64 öffnende keilförmige Ausnehmung 80 auf. Die keilförmige Ausnehmung 80 erstreckt sich von dem hinteren Ende 64 bis nahe an die kreisförmige Aussparung 68. An einem Ende der keilförmigen Ausnehmung 80, der dem hinteren Ende 64 des Grundkörpers 16 abgewandt ist, weist die rechte Seitenwand 38 einen keilförmigen Einschnitt 82 auf. Der keilförmige Einschnitt 82 öffnet sich in Richtung der Oberseite 30 und beginnt an einer Berührstelle der Seitenwand 38 mit der oberen Anlagefläche 32. Dadurch entsteht der vom hinteren Ende 64 betrachtet L-förmige, erste nachgiebig ausgestaltete Bereich 26. Der nachgiebig ausgebildete Bereich 26 ist als eine federnde Lasche ausgebildet. An dem als federnde Lasche ausgebildeten Bereich 26 ist an einer der länglichen Aussparung 78 zugewandten Seite der rechten Seitenwand 38 ein keilförmiger Ansatz 84 angeformt, der sich in Richtung des hinteren Endes 64 des Grundkörpers 16 erhebt. Der keilförmige Ansatz 84 bildet eine erste seitliche Anlagefläche für den Wischarmadapter 12 aus.

An seiner Unterseite 18 bildet der Grundkörper 16 ein Plateau 20 aus. Das Plateau 20 wird von der unteren Querwand 56, die die untere Anlagefläche 58 aufweist, gebildet. Das Plateau 20 erstreckt sich von dem hinteren Ende 64 des Grundkörpers 16 bis zu der Quernut 66. Der zum Zwecke des Form- und/oder Toleranzausgleichs vorgesehene nachgiebige Bereich 22 ist innerhalb des Plateaus 20 angeordnet. Der innerhalb des Plateaus 20 angeordnete nachgiebig ausgebildete Bereich 22 ist als eine federnde Lasche ausgebildet. Zur Ausbildung des nachgiebigen Bereichs 22 ist in die Anlagefläche 58 der unteren Querwand 56 eine L-förmige Nut 86 eingebracht. Dabei ist eine Seite der L-förmigen Nut 86 parallel zu den Seitenwänden 36, 38 und der linken Seitenwand 36 zugewandt und eine in einem rechten Winkel und der ersten Seite der Nut 86 stehende zweite Seite dem hinteren Ende 64 des Grundkörpers 16 zugewandt. Die zweite Seite der Nut 86 verläuft dabei von der ersten Seite der Nut 86 bis hin zu der rechten Seitenwand 38. In einem Bereich der L-förmigen Nut 86 ist in der rechten Seitenwand 38 eine dreiecksförmige Aussparung 88 eingebracht, die von der mittleren Querwand 54 bis fast an ein unteres Ende der rechten Seitenwand 38 reicht. Durch die L-förmige Nut 86 und die dreiecksförmige Aussparung 88 in der rechten Seitenwand 38 ist der nachgiebig ausgebildete Bereich 22 gebildet. Der nachgiebig ausgebildete Bereich 22, der als federnde Lache ausgebildet ist, ist an einer dem vorderen Ende 62 des Grundkörpers 16 zugewandten Seite mit der unteren Querwand 56, die das Plateau 20 ausbildet, verbunden. An dem als federnde Lasche ausgebildeten nachgiebigen Bereich 22 ist an einer der L-förmigen Nut 86 zugewandten Seite der rechten Seitenwand 38 ein keilförmiger Ansatz 90 angeformt, der sich in Richtung des hinteren Endes 64 des Grundkörpers 16 erhebt. Der keilförmige Ansatz 90 bildet eine erste seitliche Anlagefläche 28 aus, die einen Anschlag für einen Wischarmadapter 12 bildet.

Die Seitenwände 36, 38 des Grundkörpers 16 weisen in einem Bereich des Plateaus 20 jeweils vier Schlitze 40 auf. Die Schlitze 40 sind derart gebildet, dass die Seitenwände 36, 38 in einem Bereich des Plateaus 20 zwischen der unteren Querwand 56 und der mittleren Querwand 54 dünne, blattfederartige schräge Stege 94 ausbilden. Dabei weist jede der Seitenwände 36, 38 jeweils einen offenen Schlitz 40 auf, der in seiner Haupterstreckungsrichtung von seiner geschlossenen Seite bis zu seiner offenen Seite, die an dem hinteren Ende 64 des Grundkörpers 16 angeordnet ist, zumindest im Wesentlichen von zwei einzelnen geradlinigen Konturlinien 96 begrenzt wird. Weiter weist jede der Seitenwände 36, 38 jeweils einen offenen Schlitz 40 auf, der in seiner Haupterstreckungsrichtung von seiner geschlossenen Seite bis zu seiner offenen Seite, die in der Quernut 66 des Grundkörpers 16 angeordnet ist, zumindest im Wesentlichen von den zwei einzelnen geradlinigen Konturlinien 96 begrenzt wird. In der rechten Seitenwand 38 ist einer der vier Schlitze 40 zu der dreiecksförmigen Aussparung 88 zur Bildung des nachgiebig ausgeformten Bereichs 22 ausgeweitet.

Die obere Anlagefläche 32 ist an dem vorderen Ende 62 des Grundkörpers 16 über einen Radius 92 mit der mittleren Fläche 60 verbunden. An der Unterseite 18 des Grundkörpers 16 ist zusätzlich zu dem innerhalb des Plateaus 20 angeordneten nachgiebigen Bereich 22 ein zweiter nachgiebiger Bereich 24 angeordnet. An dem Radius 92 des Grundkörpers 16 ist der zweite nachgiebige Bereich 24 angeordnet. Der zweite nachgiebig ausgeformte Bereich 24 ist als eine federnde Lasche ausgebildet, die in die von einer Oberseite 30 des Grundkörpers 16 abgewandte Richtung über das Plateau 20 hinausragt. Die rechte Seitenwand 38 weist eine gekrümmte Aussparung 98 auf, die von der mittleren Querwand 54 ausgeht und nach unten hin geöffnet ist. In einem Übergang von dem Radius 92 zu der mittleren Fläche 60 ist eine L-förmige Aussparung 100 angeordnet. Der als federnde Lasche ausgebildete, nachgiebig ausgeformte Bereich 24 weist eine der linken Seitenwand 36 zugewandte Anlagefläche 102 auf, die einen Anschlag für den Wischarmadapter 12 bildet.

Im Folgenden soll kurz eine Befestigung von Wischarmadaptern 12 beschrieben werden, die unterschiedliche Maße aufweisen. Weist der Wischarmadapter 12 eine Breite auf, die dem Abstand zwischen der linken Seitenwand 36 und den Anlageflächen 28, 102 der nachgiebig ausgeformten Bereiche 22, 24 entspricht, liegt der Wischarmadapter 12 in einem montierten Zustand an der Seitenwand 36 und den Anlageflächen 28, 102 der nachgiebig ausgeformten Bereiche 22, 24, 26 an und wird dadurch fixiert und zentriert. Je nach Radius der Biegung des Wischarmadapters 12 kann ein abgebogenes Stück des Wischarmadapters 12 entweder zwischen die mittlere Querwand 54 und die untere Querwand 56 oder zur Anlage unter die untere Anlagefläche 58 der unteren Querwand 56 gelangen. Ist die Breite des Wischarmadapters 12 breiter als der Abstand zwischen der linken Seitenwand 36 und den Anlageflächen 28, 102 der nachgiebig ausgeformten Bereiche 22, 24, insbesondere so breit wie ein Abstand zwischen den beiden Seitenwänden 36, 38, werden die nachgiebig ausgeformten Bereiche 22, 24, 26 während der Montage von dem Wischarmadapter 12 überdrückt. Zur Fixierung des Wischarmadapters 12 in dem Grundkörper 16 wird ein nicht näher dargestellter Deckel über den Grundköper geklappt und verrastet, so dass der Wischarmadapter 12 nach einer Montage fest und verliersicher mit dem Wischblatt 10 verbunden ist.

## Patentansprüche

1. Wischblattadaptereinheit zum Verbinden eines Wischblatts (10) mit einem Wischarmadapter (12), mit einem insbesondere ein Ende (14) des Wischarmadapters (12) aufnehmenden Grundkörper (16), der auf seiner Unterseite (18) ein Plateau (20) aufweist, wobei an dem Grundkörper (16) zumindest ein Bereich (22, 24, 26) vorgesehen ist, der zum Zwecke eines Form- und/oder Toleranzausgleichs nachgiebig ausgeformt ist, wobei der zum Zwecke eines Form- und/oder Toleranzausgleichs nachgiebige Bereich (22) innerhalb des Plateaus (20) angeordnet ist, **dadurch gekennzeichnet, dass** der innerhalb des Plateaus (20) angeordnete nachgiebig ausgebildete Bereich (22) als eine federnde Lasche ausgebildet ist.

2. Wischblattadaptereinheit nach Anspruch 1, **dadurch gekennzeichnet, dass** der als federnde Lasche ausgebildete Bereich (22) zumindest eine Anlagefläche (28) aufweist, die einen Anschlag für einen Wischarmadapter (12) bildet.

3. Wischblattadaptereinheit nach einem der vorhergehenden Ansprüche, **dadurch gekennzeichnet, dass** an der Unterseite (18) des Grundkörpers (16) zusätzlich zu dem innerhalb des Plateaus (20) angeordneten nachgiebig ausgebildeten Bereich (22) zumindest der zweite nachgiebige Bereich (24) angeordnet ist.

4. Wischblattadaptereinheit nach Anspruch 3, **dadurch gekennzeichnet, dass** der zweite an der Unterseite (18) des Grundkörpers (16) angeordnete nachgiebig ausgeformte Bereich (24) als eine federnde Lasche ausgebildet ist, die in eine von einer Oberseite (30) des Grundkörpers (16) abgewandte Richtung über das Plateau (20) hinausragt.

5. Wischblattadaptereinheit nach einem der vorhergehenden Ansprüche, **dadurch gekennzeichnet, dass** der Grundkörper (16) an einer Oberseite (30) eine obere Anlagefläche (32) aufweist, in die eine zumindest im Wesentlichen in einer Wischrichtung verlaufende Tasche (34) eingebracht ist.

6. Wischblattadaptereinheit nach einem der vorhergehenden Ansprüche, **dadurch gekennzeichnet, dass** der Grundkörper (16) zwei Seitenwände (36, 38) aufweist, die in einem Bereich des Plateaus (20) jeweils zumindest vier Schlitze (40) aufweisen.

7. Wischblattadaptereinheit nach einem der vorhergehenden Ansprüche, **dadurch gekennzeichnet, dass** der Grundkörper (16) zumindest eine Seitenwand (36, 38) aufweist, die in einem Bereich des Plateaus (20) zumindest einen offenen Schlitz (40) aufweist, der in seiner Haupterstreckung von seiner geschlossenen Seite bis zu seiner offenen Seite zumindest im Wesentlichen von einer einzelnen zumindest im Wesentlichen geradlinigen Konturlinie (96) begrenzt ist.

8. Wischsystem mit einer Wischblattadaptereinheit nach einem der vorhergehenden Ansprüche.

## Claims

1. Wiper blade adapter unit for connecting a wiper blade (10) to a wiper arm adapter (12), having a base body (16) that receives in particular one end (14) of the wiper arm adapter (12) and that has a plateau (20) on its underside (18), wherein at least one region (22, 24, 26) is provided on the base body (16), this region being configured flexibly for the purpose of a shape and/or tolerance compensation, wherein the region (22) that is configured flexibly for the purpose of a shape and/or tolerance compensation is arranged inside the plateau (20), **characterized in that** the flexibly configured region (22) arranged inside the plateau (20) is configured as an elastic tab.

2. Wiper blade adapter unit according to Claim 1, **characterized in that** the region (22) that is configured as an elastic tab has at least one bearing surface (28) that forms a stop for a wiper arm adapter (12).

3. Wiper blade adapter unit according to either of the preceding claims, **characterized in that** at least the second flexible region (24) is arranged on the underside (18) of the base body (16) in addition to the flexibly configured region (22) arranged inside the plateau (20).

4. Wiper blade adapter unit according to Claim 3, **characterized in that** the second flexibly configured region (24) arranged on the underside (18) of the base body (16) is configured as an elastic tab that projects beyond the plateau (20) in a direction facing away from an upper side (30) of the base body (16).

5. Wiper blade adapter unit according to one of the preceding claims, **characterized in that** the base body (16) has an upper bearing surface (32) on an upper side (30), into which upper bearing surface a tab (34) running at least substantially in a wiping direction is introduced.

6. Wiper blade adapter unit according to one of the preceding claims, **characterized in that** the base body (16) has two side walls (36, 38) that each have at least four slots (40) in a region of the plateau (20).

7. Wiper blade adapter unit according to one of the preceding claims, **characterized in that** the base body (16) has at least one side wall (36, 38) that has at least one open slot (40) in a region of the plateau (20), which slot is bounded at least substantially, in terms of its main extent from its closed side to its open side, by an individual at least substantially rectilinear contour line (96).

8. Wiper system having a wiper blade adapter unit according to one of the preceding claims.

## Revendications

1. Unité d'adaptation de balai d'essuie-glace destinée à relier un balai d'essuie-glace (10) à un adaptateur de bras d'essuie-glace (12) à un corps de base (16) qui reçoit notamment une extrémité (14) de l'adaptateur de bras d'essuie-glace (12) et qui comporte sur son côté inférieur (18) un plateau (20), le corps de base (16) comportant au moins une région (22, 24, 26) qui est conçue pour être flexible afin de réaliser une compensation de forme et/ou de tolérance, la région flexible (22) destinée à la compensation de forme et/ou de tolérance étant disposée à l'intérieur du plateau (20), **caractérisée en ce que** la région flexible (22) disposée à l'intérieur du plateau (20) est conçue comme une attache élastique.

2. Unité d'adaptation de balai d'essuie-glace selon la revendication 1, **caractérisée en ce que** la région (22) conçue comme une attache élastique possède au moins une surface d'appui (28) qui forme une butée destinée à un adaptateur de bras d'essuie-glace (12).

3. Unité d'adaptation de balai d'essuie-glace selon l'une des revendications précédentes, **caractérisée en ce que** le côté inférieur (18) du corps de base (16) comporte, outre la région flexible (22) disposée à l'intérieur du plateau (20), au moins la deuxième région flexible (24).

4. Unité d'adaptation de balai d'essuie-glace selon la revendication 3, **caractérisée en ce que** la deuxième région flexible (24) formée du côté inférieur (18) du corps de base (16) est réalisée sous la forme d'une attache élastique qui fait saillie au-dessus du plateau (20) dans une direction opposée à un côté supérieur (30) du corps de base (16).

5. Unité d'adaptation de balai d'essuie-glace selon l'une des revendications précédentes, **caractérisée en ce que** le corps de base (16) possède sur un côté supérieur (30) une surface d'appui supérieure (32) dans laquelle est ménagée une poche (34) qui s'étend au moins sensiblement dans une direction d'essuyage (34).

6. Unité d'adaptation de balai d'essuie-glace selon l'une des revendications précédentes, **caractérisée en ce que** le corps de base (16) comporte deux parois latérales (36, 38) qui comporte chacune au moins quatre fentes (40) dans une région du plateau (20).

7. Unité d'adaptation de balai d'essuie-glace selon l'une des revendications précédentes, **caractérisée en ce que** le corps de base (16) comporte au moins une paroi latérale (36, 38) qui comporte, dans une région du plateau (20), au moins une fente ouverte (40) qui est délimitée, dans son extension principale allant de son côté fermé jusqu'à son côté ouvert, au moins sensiblement par une seule ligne de contour au moins sensiblement rectiligne (96).

8. Système d'essuie-glace comprenant une unité d'adaptation de balai d'essuie-glace selon l'une des revendications précédentes.
